(19) Europäisches Patentamt
European Patent Office
Office européen des brevets

(11) **EP 2 048 255 B1**

(12) **EUROPEAN PATENT SPECIFICATION**

(45) Date of publication and mention
of the grant of the patent:
**05.06.2013 Bulletin 2013/23**

(51) Int Cl.:
*C22C 38/00* *(2006.01)*     *B23K 35/30* *(2006.01)*
*C22C 19/05* *(2006.01)*     *B23K 9/23* *(2006.01)*
*B23K 103/04* *(2006.01)*

(21) Application number: **07791364.8**

(22) Date of filing: **26.07.2007**

(86) International application number:
**PCT/JP2007/064664**

(87) International publication number:
**WO 2008/013223 (31.01.2008 Gazette 2008/05)**

(54) **AUSTENITIC STAINLESS STEEL WELDED JOINT AND AUSTENITIC STAINLESS STEEL WELDING MATERIAL**

SCHWEISSVERBINDUNG AUS AUSTENITISCHEM NICHTROSTENDEM STAHL UND SCHWEISSMATERIAL AUS AUSTENITISCHEM NICHTROSTENDEM STAHL

JOINT SOUDÉ EN ACIER INOXYDABLE AUSTÉNITIQUE ET MATÉRIAU DE SOUDURE EN ACIER INOXYDABLE AUSTÉNITIQUE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **27.07.2006 JP 2006204598**

(43) Date of publication of application:
**15.04.2009 Bulletin 2009/16**

(73) Proprietor: **Nippon Steel & Sumitomo Metal Corporation**
**Tokyo 100-8071 (JP)**

(72) Inventors:
• **OSUKI, Takahiro**
**Osaka-shi, Osaka 541-0041 (JP)**

• **OGAWA, Kazuhiro**
**Osaka-shi, Osaka 541-0041 (JP)**
• **OKADA, Hirokazu**
**Osaka-shi, Osaka 541-0041 (JP)**
• **IGARASHI, Masaaki**
**Osaka-shi, Osaka 541-0041 (JP)**

(74) Representative: **TBK**
**Bavariaring 4-6**
**80336 München (DE)**

(56) References cited:
**EP-A1- 1 867 743      JP-A- 06 279 947
JP-A- 61 103 698      JP-A- 62 243 742
JP-A- 62 243 743      JP-A- 2001 107 196
JP-A- 2005 048 284**

**Description**

TECHNICAL FIELD

The present invention relates to an austenitic stainless steel welded joint and to an austenitic stainless steel welding material. More specifically, the present invention relates to an austenitic stainless steel welded joint and an austenitic stainless steel welding material, which not only can be widely applied as steel pipes, steel plates and so on in such fields where high-temperature strength and corrosion resistance are required, but also have good welding performance characteristics, in spite of a P content as high as more than 0.08% and not more than 0.5%.

BACKGROUND ART

Conventionally, in boilers and chemical plants which are used under high-temperature conditions, austenitic stainless steels, such as SUS304H, SUS316H, SUS321H, SUS347H, SUS310S and so on, which are prescribed in JIS, have been used.

However, in recent years, the steam conditions in boilers and the like have shifted toward higher temperatures and higher pressure conditions and, accordingly, the requirements imposed on the performance characteristics of the materials to be used have become more severe and, under the said situation, those austenitic stainless steels which have so far been used are considerably insufficient in high-temperature strength; the development of economical steels more improved in high-temperature strength has been desired.

Carbide precipitation is effective as a method for improving the high-temperature strength, in particular creep strength of austenitic stainless steels, and therefore the strengthening mechanism by carbides such as $M_{23}C_6$, NbC and so on are in use. The Cu phase, which finely precipitates during creep as a result of the addition of Cu, is also utilized for increasing the creep strength.

However, an increased C content for carbide precipitation results in a deterioration in corrosion resistance, and carbide-forming strengthening elements are all expensive. Further, a large amount of the addition of Cu decreases the hot workability, weldability and creep ductility, so that the contents of the carbide-forming strengthening elements and Cu are restricted.

On the other hand, it is known that P, which is essentially an impurity element, contributes to the refinement of the $M_{23}C_6$ type carbides and to the improvement of creep strength. Therefore, for example, the Patent Document 1 and the Patent Document 2 propose the P-containing austenitic stainless steels.

That is to say, the Patent Document 1 and 3 disclose an austenite stainless steel improved in creep rupture strength by controlling the content of P within a specific range and adjusting the contents of Ti and Nb in response to the content of C.

The Patent Document 2 discloses an austenitic stainless steel whose creep rupture characteristics are prevented from deteriorating by suppressing the formation of the ferrite phase which is markedly low in resistance to creep deformation compared to the austenite phase, and at the same time by utilizing the precipitation strengthening effect of phosphides through the addition of a specific amount of P.

Patent Documents 1 and 3: Japanese Laid-Open Patent Publication No. 62-243742 and JP 62 243 743
Patent Document 2: Japanese Laid-Open Patent Publication No. 03-153847

JP62243743 discloses an austenitic stainless steel for use at high temp. having superior creep rupture strength by restricting the amount of P in a steel to a proper range and further restricting the amounts of Ti and Nb. The composition of an austenitic stainless steel is composed of, by weight, 0.05-0.15% C, <1% Si, <2% Mn, 7-18% Ni, 15-25% Cr, <0.03% T, N, 0.02-0.08% P, <0.5% Ti and/or <1% Nb and the balance Fe with inevitable impurities. The composition may further contain <0.01% B and/or <0.1% Zr. In the composition, the atomic ratio of (Ti+Nb)/C is 0.2-0.8.

DISCLOUSRE OF THE INVENTION

PROBLEMS TO BE SOLVED BY THE INVENTION

The technique which comprises increasing the content of P as disclosed in the above-mentioned Patent Document 1 and Patent Document 2 causes a deterioration of weldability. That is to say, an increased P content, in particular, a large amount of P content which exceeds 0.05%, significantly causes cracking which occurs when the distortion resulting from the solidification shrinkage or thermal shrinkage exceeds the deformability of the weld metal, in particular, in the stage which is close to the end of the weld solidification process and in which a filmy liquid phase is present mainly along the crystal grain boundaries (hereinafter such cracking is referred to as "weld solidification cracking"). Therefore, in particular, such a large amount of P content which exceeds 0.05% is placed under restrictions from the weldability viewpoint; hence, in the case of the austenitic stainless steels disclosed in the Patent Document 1 and the Patent Document 2, the creep strength-improving effect of P cannot be said to be satisfactorily utilized.

Accordingly, one objective of the present invention is to provide a high-P austenitic stainless steel welded joint being comprised of base metals and a weld metal which have excellent weldability, in spite of having a high creep strength and being economical. Another objective of the present invention is to provide a high-P austenitic stainless steel welding material having the same characteristics of the said austenitic stainless steel welded joint.

MEANS FOR SOLVING THE PROBLEMS

The present inventors made various investigations in order to ensure austenitic stainless steels, which are high in creep strength and economical and contain P at a high concentration, and also have excellent weldability by preventing weld solidification cracking.

As mentioned above, the said weld solidification cracking occurs when the liquid phase, which exists among dendrites during weld solidification, remains in a filmy form until low temperature regions, and cannot withstand the applied stress.

An increased P content results in an increase in susceptibility to weld solidification cracking and thus increases the occurrence of weld solidification cracking. This is due to P being markedly concentrated in the liquid phase during solidification and therefore greatly lowers the solidification completion temperature of the liquid phase and thus the liquid phase remains until low temperature regions.

Therefore, various investigations have been made to reduce the occurrence of the weld solidification cracking due to the content of P which is contained as an impurity element. It is known that the said weld solidification cracking can be suppressed when the chemical composition is balanced so that ferrite solidification may occur in the primary phase, as disclosed, for example, in the Japanese Laid-Open Patent Publication No. 2003-535213, paragraphs 0030 and 0031.

"Sutenresuko no Yosetsu (Welding of Stainless Steel), First Edition (written by Kazutoshi Nishimoto, Syogo Natsume, Kazuhiro Ogawa and Osa Matsumoto; published in 2001 by Sanpo Publications, Inc.)", pages 87 to 88, describes in detail the mechanisms for preventing the weld solidification cracking utilizing delta-ferrite and explains that the prevention of the weld solidification cracking can be realized by the liquid phase splitting due to transformation from delta-ferrite to austenite in the solidification mode in which the ferrite forms primary crystals, namely in the "FA mode".

Contrary to the above-cited documents, the present inventors, based on the idea that the crystallization of the very phase crystallizing out after the primary phase, (for example, austenite in the case of solidification in the "FA mode"), would be effective in preventing the said weld solidification cracking, made detailed investigations concerning the crystallization behavior of the phase crystallizing out after the primary phase in various austenitic stainless steel weld metals.

As a result, it was first revealed that not only when the solidification mode is the above-mentioned "FA mode", in which primary crystals are formed as ferrite, but also when the solidification mode is the "AF mode", in which primary crystals are formed as austenite, the phase crystallizing out after the primary phase is predominantly of the separate eutectic type crystals crystallizing out and growing from the liquid phase central part during weld solidification.

Thus, the inventors came to realize that if the timing of the crystallization of austenite or delta-ferrite crystallizing out after the primary phase crystallization is controlled, so as to be developed earlier and thereby the remaining filmy liquid phase is split in order to divide the direction of the propagation of cracking, the increase in susceptibility to the weld solidification cracking due to an increase in P content, namely the increase of occurrence of the weld solidification cracking, can be prevented not only in the case of "FA mode" but also in the case of "AF mode".

When the P content is not less than 0.05%, the influence of P on the solidification mode is considered to be not negligible.

Therefore, a microsegregation calculation model, making it possible to predict the stainless steel solidification mode was prepared, taking the influence of P into consideration.

Based on this microsegregation calculation model, various austenitic stainless steels which differ in chemical composition and show either the "FA mode" or "AF mode" solidification mode were prepared and subjected to testing for susceptibility to the weld solidification cracking.

As a result, it was revealed that it is possible to inhibit the weld solidification cracking, not only in the case of the "FA mode" solidification mode, but also in the case of the "AF mode" solidification mode, if the timing of crystallization of the phase crystallizing out after the primary phase is made earlier, even if the P content is not less than 0.05%.

Then, the present inventors made further detailed investigations by varying the contents of C, Si, Mn, S, Cr, Ni, sol. Al, B, Nb, Ti and N in austenitic stainless steels containing P at a level of more than 0.08%.

As a result, it was found that, in the case of austenitic stainless steels which consists of by mass percent C: 0.05 to 0.25%, Si: not more than 2%, Mn: 0.01 to 1.5%, P: more than 0.08% to 0.5%, S: not more than 0.03%, Cr: 18 to 30%, Ni: 8 to 55%, sol. Al: 0.001 to 0.1%, N: not more than 0.03%, B: 0.001 to 0.03%, Nb: 0.05 to 1.5%, Ti: 0.05 to 2% and optionally at least one element selected from the first and second groups given below, with the balance being Fe and impurities, the weld solidification cracking can be surely and stably inhibited when the composition is designed so that the formula (1) given below may be satisfied and the timing of the crystallization of the phase crystallizing out after the primary phase is controlled.

$$(Cr + 1.5 \times Si + 2 \times P) / (Ni + 0.31 \times Mn + 22 \times C + 14.2 \times N + 5 \times P)$$
$$> 1.388 \cdots \text{Formula (1)};$$

In the formula (1), each element symbol represents the content by mass percent of the element concerned.

The present inventors further made investigations concerning the cases where the above-mentioned austenitic stainless steels further contain Cu, Mo, W, Ta, Zr, Hf, Co, Ca and Mg in lieu of part of Fe.

As a result, it was revealed that, in the case of austenitic stainless steels containing at least one element selected from the first and second groups given below in lieu of part of Fe, the said weld solidification cracking can be surely and stably inhibited when the composition is designed so that the formula (2) given below may be satisfied and the timing of the crystallization of the phase crystallizing out after the primary phase is controlled.

First group: one or more of Cu: not more than 3%, Mo: not more than 5% and W: not more than 10% provided that Mo + (W/2): not more than 5%, Ta: not more than 8%, Zr: not more than 1%, Hf: not more than 1% and Co: not more than 5%; and

Second group: one or both of Ca: not more than 0.05% and Mg: not more than 0.05%;

$$(Cr + 1.5 \times Si + 2 \times Nb + Ti + 2 \times P) / (Ni + 0.31 \times Mn + 22 \times C + 14.2$$
$$\times N + Cu + 5 \times P) \geq 1.388 \cdots \text{Formula (2)};$$

In the formula (2), each element symbol represents the content by mass percent of the element concerned.

The present invention has been accomplished on the basis of the above-described findings. The main points of the present invention are austenitic stainless steel welded joints shown in the following (1) and (2), and austenitic stainless steel welding materials shown in the following (3) and (4).

(1) An austenitic stainless steel welded joint, which i consists of by mass percent, C: 0.05 to 0.25%, Si: not more than 2%, Mn: 0.01 to 1.5%, P: more than 0.08% to 0.5%, S: not more than 0.03%, Cr: 18 to 30%, Ni: 8 to 55%, sol. Al: 0.001 to 0.1% and N: not more than 0.03%, B: 0.001 to 0.03%, Nb: 0.05 to 1.5%, Ti: 0.05 to 2% and optionally at least one element selected from the first and second groups given below, with the balance being Fe and impurities, and the following formula (1) is satisfied:

$$(Cr + 1.5 \times Si + 2 \times P) / (Ni + 0.31 \times Mn + 22 \times C + 14.2 \times N + 5 \times P)$$
$$\geq 1.388 \cdots \text{Formula (1)};$$

In the formula (1), each element symbol represents the content by mass percent of the element concerned;

First group: one or more of Cu: not more than 3%, Mo: not more than 5% and W: not more than 10% provided that Mo + (W/2): not more than 5%, Ta: not more than 8%, Zr: not more than 1%, Hf: not more than 1% and Co: not more than 5%; and

Second, group: one or both of Ca: not more than 0.05% and Mg: not more than 0.05%.

(2) The austenitic stainless steel welded joint according to the above (1), which further satisfies the following formula (2):

$$(Cr + 1.5 \times Si + 2 \times Nb + Ti + 2 \times P) / (Ni + 0.31 \times Mn + 22 \times C + 14.2$$
$$\times N + Cu + 5 \times P) \geq 1.388 \cdots \text{Formula (2)};$$

In the formula (2), each element symbol represents the content by mass percent of the element concerned.

(3) An austenitic stainless steel welding material, which consists of by plass percent, C: 0.05 to 0.25%, Si: not more than 2%, Mn: 0.01 to 1.5 %, P: more than 0.08% to 0.5%, S: not more than 0.03%, Cr: 18 to 30%, Ni: 8 to 55%, sol. Al: 0.001 to 0.1% and N: not more than 0.03%, B: 0.001 to 0.03%, Nb: 0.05 to 1.5%, Ti: 0.05 to 2% and optionally at least one element selected from the first and second groups given below, with the balance being Fe and impurities, and the following formula (1) is satisfied:

$$(Cr + 1.5 \times Si + 2 \times P)/(Ni + 0.31 \times Mn + 22 \times C + 14.2 \times N + 5 \times P) \geq 1.388 \cdots \text{Formula (1);}$$

In the formula (1), each element symbol represents the content by mass percent of the element concerned;

First group: one or more of Cu: not more than 3%, Mo: not more than 5% and W: not more than 10% provided that Mo + (W/2): not more than 5%, Ta: not more than 8%, Zr: not more than 1%, Hf: not more than 1% and Co: not more than 5%; and

Second group: one or both of Ca: not more than 0.05% and Mg: not more than 0.05%

(4) The austenitic stainless steel welding material according to the above (3), which further satisfies the following formula (2) :

$$(Cr + 1.5 \times Si + 2 \times Nb + Ti + 2 \times P)/(Ni + 0.31 \times Mn + 22 \times C + 14.2 \times N + Cu + 5 \times P) \geq 1.388 \cdots \text{Formula (2);}$$

In the formula (2), each element symbol represents the content by mass percent of the element concerned.

The above-mentioned inventions (1) and (2) related to the austenitic stainless steel welded joints and the inventions (3) and (4) related to the austenitic stainless steel welding materials are referred to as "the present invention (1)" to "the present invention (4)", respectively, or collectively referred to as "the present invention".

EFFECTS OF THE INVENTION

The austenitic stainless steel welded joints of the present invention, in spite of their high P content, can be widely applied in such fields, as steel pipes, steel plates and so on, where not only high-temperature strength and corrosion resistance but also weldability is required. The austenitic stainless steel welding materials of the present invention are best suited for producing the above-mentioned austenitic stainless steel welded joints.

BRIEF DESCRIPTION OF THE DRAWING

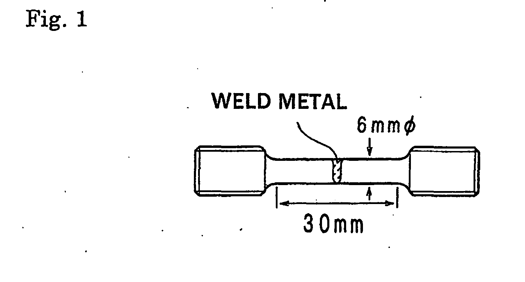

    [Fig. 1] Fig. 1 shows the shape of a test specimen used in creep rupture testing in the examples.

BEST MODES FOR CARRYING OUT THE INVENTION

In the following, the reasons for restricting the contents of the component elements of the welded joints and welding materials in the present invention are described in detail. In the following description, the symbol "%" for the content of each element means "% by mass".

C: 0.05 to 0.25%

C is an important element effective for ensuring the tensile strength and creep strength which is required for use in a high-temperature environment. In the austenitic stainless steels of the present invention, the above-mentioned effects can be produced and the required high-temperature strength can be obtained only when the content of the C is not less than 0.05%. At a C content level which exceeds 0.25%, however, only the amounts of undissolved carbides in the solution heat treated state increase and no further contribution to the improvement in high-temperature strength can be expected; further, toughness and other mechanical properties as well as corrosion resistance may deteriorate. Therefore, the content of C is set to 0.05 to 0.25%. The content of C is preferably more than 0.06% to not more than 0.2%. More preferably, the content of C is 0.07 to 0.15%.

Si: not more than 2%

Si is an element having a deoxidizing effect in the step of melting the austenitic stainless steels and further is effective in increasing oxidation resistance, steam oxidation resistance and so on. When such effects are required, Si is desirably added at a content level of not less than 0.1%. If the Si content level exceeds 2% however, Si promotes the precipitation of such intermetallic compound phases as the σ phase and also causes a decrease in toughness and ductility due to the deterioration of the microstructural stability at high temperatures. Furthermore, in the case of complete austenite phase solidification, the susceptibility to the weld solidification cracking markedly increases, so that the occurrence of the said weld solidification cracking increases. Therefore, the content of Si is set to not more than 2%. More preferably, the content of Si is not more than 1%.

Mn: 0.01 to 1.5%

Mn is an element effective in preventing hot working brittleness due to the S which is contained as an impurity in the austenitic stainless steels and, it also has a deoxidizing effect in the step of melting the steels. In order to obtain such effects, a content of Mn not less than 0.01% is necessary. However, if the Mn content level exceeds 1.5%, Mn promotes the precipitation of such intermetallic compound phases as the σ phase and also causes a decrease in toughness and ductility due to the deterioration of the microstructural stability at high temperatures. Therefore, the content of Mn is set to 0.01 to 1.5%. The content of Mn is more preferably 0.05 to 1.5% and further more preferably 0.1 to 1.5%.

P: more than 0.08% to 0.5%

P is an important element in the present invention. That is to say, for contributing to fine carbide precipitation and improving the creep strength of the austenitic stainless steels of the present invention, the content of P is required to be more than 0.08%. However, an excessive content of P causes deterioration of creep ductility and, in particular, when the content of P exceeds 0.5%, the deterioration of creep ductility becomes remarkable. Therefore, the content of P is set to more than 0.08% to 0.5%. The content of P is more preferably more thant 0.08% to 0.3% and further more preferably more than 0.08% to not more than 0.2%.

S: not more than 0.03%

S is an impurity element coming from raw materials, for example, on the occasion of the melting of the austenitic stainless steels. A high content of S causes deterioration of corrosion resistance and also deteriorates the hot workability and weldability; in particular, when the content of S exceeds 0.03%, the deterioration of corrosion resistance, workability and weldability becomes significant. Therefore, the content of S is set to not more than 0.03%. It is desirable that the S content be reduced as low as possible. Therefore, the content of S is more preferably not more than 0.01% and most preferably not more than 0.005%.

Cr: 18 to 30%

Cr is an important element for ensuring the oxidation resistance, steam oxidation resistance, high-temperature corrosion resistance and so on, and also contributes to increasing the creep strength through formation of Cr-based carbides. In order to obtain the above-mentioned effects, it is necessary that the Cr content be not less than 18%. As the content of Cr increases, the corrosion resistance is improved but when the content of Cr exceeds 30%, the austenitic microstructure becomes unstable, readily allowing the formation of such intermetallic compounds as the σ phase or the α-Cr phase, and so the deterioration of toughness and high-temperature strength occurs. Therefore, the content of Cr is set to 18 to 30%. More preferably, the content of Cr is 18 to 28%.

Ni: 8 to 55%

Ni is an essential element for ensuring a stable austenitic microstructure and the necessary minimum content of Ni is determined by the contents of elements contained in the austenitic stainless steels such as Cr, Mo, W, Nb and the like, which are the ferrite-forming elements, and Mn, C, N and so on, which are the austenite-forming elements. In the present invention, it is necessary that the content of Cr be not less than 18% and, if the Ni content is lower than 6% relative to the Cr content, it is difficult to produce a single phase of austenite and, furthermore, the austenitic microstructure becomes unstable during a long period of use at high temperatures and the high-temperature strength and toughness markedly deteriorate due to the precipitation of such brittle phases as the σ phase. On the other hand, if the Ni content level exceeds 55%, the said effects of Ni arrive at saturation levels and the economic efficiency is impaired. Therefore, the content of Ni is set to 8 to 55%. When the Ni content is high, the solidification mode becomes the "A mode", namely austenite single phase solidification, the formula (1) given above may not be satisfied in certain cases and, therefore, the content of Ni is preferably 8 to 30%. More preferably, the content of Ni is 8 to 25%.

Sol.Al: 0.001 to 0.1%

Al has a deoxidizing effect on the occasion of the melting of the austenitic stainless steels. In order to obtain this effect, it is necessary that the content of Al as sol.Al ("acid-soluble Al") be not less than 0.001%. However, when the content of Al as sol.Al exceeds 0.1%, the precipitation of such intermetallic compounds as the σ phase is promoted during use at high temperatures, leading to deterioration of toughness, ductility and high-temperature strength. Therefore, the content of sol.Al is set to 0.001 to 0.1%. The content of sol.Al is more preferably 0.005 to 0.05% and further more preferably 0.01 to 0.03%.

N: not more than 0.03%

A content of N which exceeds 0.03% causes deterioration of hot workability and, therefore, the content of N is set to not more than 0.03%. It is desirable that the N content be reduced as low as possible. Thus, the content of N is more preferably not more than 0.02% and further more preferably not more than 0.015%.

The value of $(Cr + 1.5 \times Si + 2 \times P) / (Ni + 0.31 \times Mn + 22 \times C + 14.2 \times N + 5 \times P)$: not less than 1.388 When the austenitic stainless steels which comprise the above-mentioned elements C to N within the respective content ranges, with the balance being Fe and impurities have a value of "$(Cr + 1.5 \times Si + 2 \times P) / (Ni + 0.31 \times Mn + 22 \times C + 14.2 \times N + 5 \times P)$" which is not less than 1.388, namely satisfy the formula (1), the timing of crystallization of the phase crystallizing out after the primary phase is controlled and the weld solidification cracking can be surely and stably inhibited.

From the reasons mentioned above, the austenitic stainless steel welded joint according to the present invention (1) and the austenitic stainless steel welding material according to the present invention (3) are defined as the ones containing the above-mentioned elements C to N within their respective content ranges, with the balance being Fe and impurities, and at the same time satisfying the said formula (1).

The austenitic stainless steel welded joint of the present invention (1) and the austenitic stainless steel welding material of the present invention (3) may further selectively contain, according to need, one or more elements of each of the following groups of elements in lieu of part of Fe;

First group: one or more of Cu: not more than 3%, Mo: not more than 5% and W: not more than 10% provided that Mo + (W/2): not more than 5%, Ta: not more than 8%, Zr: not more than 1%, Hf: not more than 1% and Co: not more than 5%; and

Second group: one or both of Ca: not more than 0.05% and Mg: not more than 0.05%.

That is to say, one or more of the first and second groups of elements may be added, as optional elements, to the above-mentioned steels and thereby contained therein.

The above-mentioned optional elements will be explained below.

First group: one or more of Cu: not more than 3%, Mo: not more than 5% and W: not more than 10% provided that Mo + (W/2): not more than 5%, Ta: not more than 8%, Zr: not more than 1%, Hf: not more than 1% and Co: not more than 5%

Each of Cu, Mo, W, Ta, Zr, Hf and Co being elements of the first group, if added, has the effect of enhancing the creep strength. In order to obtain this effect, the said elements may be added to the steels and thereby contained therein. The elements, which are in the first group, are now described in detail.

Cu: not more than 3%

Cu precipitates as the state of a fine Cu phase coherently with the austenitic mother phase during use at high temperatures, producing a marked creep strength improving effect. In order to ensure the above-mentioned effect, the content of Cu is preferably not less than 0.01%. However, at a high Cu content level, in particular, at a Cu content level of more than 3%, Cu causes a decrease in hot workability, weldability and creep ductility. Therefore, if Cu is added, the content of Cu is set to not more than 3%. The content of Cu is preferably 0.01 to 3%. The upper limit of the Cu content is more preferably 2.0% and further more preferably 0.9%.

Mo: not more than 5% and W: not more than 10% provided that Mo + (W/2): not more than 5%.

Mo and W are effective elements to improve the creep strength and high-temperature strength. In order to ensure the above-mentioned effects, the content of Mo or W, when each is added singly, is preferably not less than 0.05%. When both the elements are combined and added, the total content of Mo + (W/2) is preferably not less than 0.05%. However, when Mo and W are added singly at a level exceeding 5% and 10%, respectively, or when Mo and W are added in combination at a level exceeding 5% as expressed in terms of Mo + (W/2), the said effects are saturated and the alloying costs increase and, in addition, the formation of such intermetallic compounds as the σ phase is induced, so the deterioration of microstructural stability and hot workability occurs. Therefore, if Mo and W are added, the contents thereof are set as follows; Mo: not more than 5% and W: not more than 10% provided that Mo + (W/2): not more than 5%. When either Mo and W are added singly, the content of Mo is preferably 0.05 to 5% while the content of W is preferably 0.05 to 10% and, when both the elements are combined and added, the total content of Mo + (W/2) is preferably 0.05 to 5%. Since Mo and W are ferrite-forming elements, the contents of each Mo and W is preferably lower than 4% in order to stabilize the austenitic microstructure.

B: 0.001 to 0.03%

B exists in carbonitrides and promotes finely dispersed the precipitation of carbonitrides during use at high temperatures, and at the same time, B exists singly at grain boundaries and therefore strengthens grain boundaries and prevents grain boundary sliding. Therefore, B improves the creep strength and high-temperature strength. In order to ensure the said effects, the content of B is set to not less than 0.001%. However, if the content of B exceeds 0.03%, deterioration of weldability occurs. Therefore, B is added, the content of B is set to not more than 0.03%. The content of B is 0.001 to 0.03% and more preferably 0.001 to 0.1%. Further more preferably, the content of B is 0.001 to 0.005%.

Nb: 0.05 to 1.5%

Nb is a carbide-forming element and is effective in improving the creep strength and high-temperature strength. In order to ensure the said effects, the content of Nb is set to not less than 0.05%. However, if the content of Nb exceeds 1.5%, marked deterioration of mechanical properties such as toughness and so on occurs. Therefore, Nb is added, the content of Nb is set to not more than 1.5%. The content of Nb is 0.05 to 1.5% and preferably 0.05 to 0.6%.

Ti: 0.05 to 2%

Ti is a carbide-forming element and is effective in improving the creep strength and high-temperature strength. In order to ensure the said effects, the content of Ti is set to not less than 0.05%. However, if the content of Ti exceeds 2%, marked deterioration of mechanical properties such as toughness and so on occurs. Therefore, Ti is added, the content of Ti is set to not more than 2%. The content of Ti is 0.05 to 2% and preferably 0.05 to 1%.

Ta: not more than 8%

Ta is also a carbide-forming element and is effective in improving the creep strength and high-temperature strength. In order to ensure the said effects, the content of Ta is preferably set to not less than 0.01%. However, if the content of Ta exceeds 8%, marked deterioration of mechanical properties such as toughness and so on occurs. Therefore, if Ta is added, the content of Ta is set to not more than 8%. The content of Ta is preferably 0.01 to 8% and more preferably 0.01 to 7%. Further more preferably, the content of Ta is 0.05 to 6%.

Zr: not more than 1%

Zr mainly contributes to grain boundary strengthening and brings about improvements in creep strength. In order to ensure the said effects, the content of Zr is preferably not less than 0.0005%. However, if the content of Zr exceeds 1%, deterioration of mechanical properties and/or weldability occurs. Therefore, if Zr is added, the content of Zr is set to not more than 1%. The content of Zr is preferably 0.0005 to 1% and more preferably 0.01 to 0.8%. Further more preferably, the content of Zr is 0.02 to 0.5%.

Hf: not more than 1%

Hf also mainly contributes to grain boundary strengthening and brings about improvements in creep strength. In order to ensure the said effects, the content of Hf is preferably not less than 0.0005%. However, if the content of Hf exceeds 1%, deterioration of mechanical properties and/or weldability occurs. Therefore, if Hf is added, the content of Hf is set to not more than 1%. The content of Hf is preferably 0.0005 to 1% and more preferably 0.01 to 0.8%. Further more preferably, the content of Hf is 0.02 to 0.5%.

Co: not more than 5%

Like Ni, Co stabilizes the austenitic microstructure and contributes to improvements in creep strength. In order to ensure the said effects, the content of Co is preferably not less than 0.05%. However, at a Co content level which exceeds 5%, the said effects of Co arrive at saturation levels and the economic efficiency only declines. Therefore, if Co is added, the content of Co is set to not more than 5%. The content of Co is preferably 0.05 to 5%.

The steels of the present invention can contain only one or a combination of two or more of the above-mentioned elements Cu, Mo, W, , Ta, Zr, Hf and Co.

Each of Ca and Mg are elements of the Second group and, if added, have the effect of improving hot workability. In order to obtain this effect, the said elements may be added to the steels and thereby contained therein. The elements, which are the second group, are now described in detail.

Ca: not more than 0.05%

Ca has an effect of improving the hot workability of steels. In order to ensure this effect, the content of Ca is preferably set to not less than 0.0001%. However, a Ca content which exceeds 0.05% causes a decrease in hot workability due to the formation of oxide type inclusions and also causes deterioration of ductility. Therefore, if Ca is added, the content of Ca is set to not more than 0.05%. The content of Ca is preferably 0.0001 to 0.05% and more preferably 0.001 to 0.02%. Further more preferably, the content of Ca is 0.001 to 0.01%.

Mg: not more than 0.05%

Mg also has an effect of improving the hot workability of steels. In order to ensure this effect, the content of Mg is preferably set to not less than 0.0001%. However, a Mg content which exceeds 0.05% causes a decrease in hot workability due to the formation of oxide type inclusions and also causes deterioration of ductility. Therefore, if Mg is added, the content of Mg is set to not more than 0.05%. The content of Mg is preferably 0.0001 to 0.05% and more preferably 0.001 to 0.02%. Further more preferably, the content of Mg is 0.001 to 0.01%.

The steels of the present invention can contain only one or a combination of both of the above-mentioned elements Ca and Mg.

The value of $(Cr + 1.5 \times Si + 2 \times Nb + Ti + 2 \times P) / (Ni + 0.31 \times Mn + 22 \times C + 14.2 \times N + Cu + 5 \times P)$: not less than 1.388

The austenitic stainless steels containing at least one element selected from the above-mentioned first and second groups in lieu of part of Fe in the austenitic stainless steel welded joint according to the present invention (1) and the austenitic stainless steel welding material according to the present invention (3), when they have a value of not less than 1.388 as the value of $(Cr + 1.5 \times Si + 2 \times Nb + 71 + 2 \times P) / (Ni + 0.31 \times Mn + 22 \times C + 14.2 \times N + Cu + 5 \times P)$, namely satisfy the formula (2), the timing of the crystallization of the phase crystallizing out after the primary phase can be controlled and the weld solidification cracking can be surely and stably inhibited.

From the reasons mentioned above, the austenitic stainless steel welded joint according to the present invention (2) and the austenitic stainless steel welding material according to the present invention (4) are defined as the ones which contain at least one element selected from the above-mentioned first and second groups in lieu of part of Fe in the austenitic stainless steel welded joint according to the present invention (1) and the austenitic stainless steel welding material according to the present invention (3), respectively, and which satisfy the said formula (2).

The austenitic stainless steel welded joints according to the present inventions (1) and (2) can be produced by various welding methods such as TIG welding, MIG welding and so on. As for the welding materials, in order to produce those austenitic stainless steel welded joints, the austenitic stainless steel welding materials according to the present inventions (3) and (4) can be used.

The following examples illustrate the present invention more specifically. These examples are, however, by no means limited to the scope of the present invention.

EXAMPLE

Austenitic stainless steels 1 to 12 and A to D having the chemical compositions shown in Table 1 were melted using a high-frequency induction vacuum furnace and cast to form ingots.

The steels 2 and 3 shown in Table 1 are steels having chemical compositions falling within the range regulated by the present invention. On the other hand, the steels A to D in Table 1 are steels of comparative examples with chemical compositions out of the range regulated by the present invention. The steels 1 and 4-12 in table 1 are steels of reference examples.

The content of P in austenitic stainless steels used for heat exchange in boilers is restricted to not more than 0.040%, as prescribed in JIS G 3463. Therefore, the P content of 0.03% in the steel A shown in Table 1 corresponds to the P content in the ordinary austenitic stainless steels used for heat exchange in boilers.

[Table 1]

Table 1

| Steel | Chemical composition (% by mass); Balance: Fe and impurities | | | | | | | | | | | | | | | | | | Value of formula |
|---|---|---|---|---|---|---|---|---|---|---|---|---|---|---|---|---|---|---|---|
| | C | Si | Mn | P | S | Cr | Ni | soLAl | N | Nd | Cu | Mo | W. | B | Nb | Ti | Ca | Mg | |
| 1 | 0.08 | 0.22 | 0.80 | 0.10 | 0.001 | 18.55 | 9.08 | 0.017 | 0.011 | 0.055 | - | - | - | 0.0040 | 0.19 | - | - | 0.0002 | 1.6570 |
| 2 | 0.08 | 0.24 | 0.79 | 0.11 | 0.001 | 18.44 | 9.15 | 0.015 | 0.013 | - | - | - | - | 0.0039 | 0.19 | 0.20 | - | - | 1.6485 |
| 3 | 0.08 | 0.34 | 0.74 | 0.10 | 0.001 | 18.52 | 10.06 | 0.028 | 0.011 | - | - | - | - | 0.0036 | 0.18 | 0.46 | 0.0003 | - | 1.5780 |
| 4 | 0.08 | 0.25 | 0.76 | 0.11 | 0.001 | 18.39 | 9.03 | 0.023 | 0.011 | 0.110 | - | - | - | 0.0088 | 0.19 | - | - | - | 1.6506 |
| 5 | 0.09 | 0.29 | 0.76 | 0.29 | 0.001 | 18.51 | 9.10 | 0.024 | 0.012 | 0.047 | - | - | - | 0.0036 | 0.19 | 0.17 | 0.0008 | 0.0002 | 1.5368 |
| 6 | 0.09 | 0.24 | 0.79 | 0.10 | 0.001 | 18.52 | 9.17 | 0.022 | 0.012 | 0.180 | - | - | - | - | - | 0.19 | - | - | 1.5971 |
| 7 | 0.11 | 0.20 | 0.79 | 0.11 | 0.001 | 18.70 | 9.27 | 0.036 | 0.007 | - | - | - | - | - | - | - | - | - | 1.5273 |
| 8 | 0.14 | 0.19 | 0.78 | 0.09 | 0.002 | 18.23 | 8.99 | 0.032 | 0.005 | - | - | - | - | - | - | 0.18 | - | - | 1.4708 |
| 9 | 0.17 | 0.19 | 0.77 | 0.10 | 0.008 | 18.52 | 9.14 | 0.024 | 0.005 | 0.003 | - | - | - | - | - | - | - | - | 1.3883 |
| 10 | 0.12 | 0.21 | 0.78 | 0.10 | 0.008 | 18.37 | 6.07 | 0.028 | 0.005 | - | 1.50 | - | - | - | - | - | - | - | 1.7133 |
| 11 | 0.17 | 0.21 | 0.78 | 0.10 | 0.002 | 18.32 | 9.06 | 0.033 | 0.005 | 0.006 | - | 1.98 | - | - | - | 0.18 | - | - | 1.3968 |
| 12 | 0.19 | 0.20 | 0.77 | 0.10 | 0.002 | 18.39 | 9.00 | 0.026 | 0.005 | 0.002 | - | - | 1.40 | - | - | 0.58 | - | - | 1.3917 |
| A | 0.10 | 0.19 | 0.82 | *0.03 | 0.001 | 18.29 | 10.07 | 0.016 | 0.008 | - | - | - | - | 0.0088 | 0.21 | - | - | - | 1.4901 |
| B | 0.08 | 0.20 | 0.81 | 0.05 | 0.001 | 18.42 | 8.91 | 0.022 | 0.009 | - | 2.99 | - | - | 0.0088 | 0.50 | - | - | - | *1.3871 |
| C | 0.10 | 0.20 | 0.82 | 0.29 | 0.001 | 18.19 | 10.28 | 0.018 | 0.006 | 0.035 | - | - | - | 0.0084 | 0.21 | 0.21 | - | - | *1.3806 |
| D | 0.10 | 0.19 | 0.81 | 0.09 | 0.001 | 18.35 | 10.06 | 0.014 | 0.008 | 0.035 | 3.00 | - | - | 0.0031 | 0.20 | 0.20 | - | - | *1.2078 |

The value of formula for steel 7 is the value of (Cr + 1.5 × Si + 2 × P) / (Ni + 0.81 × Mn + 22 × C + 14.2 × N + 5 × P); for other steels, values of (Cr + 1.5 × Si + 2 × Nb + Ti + 2 × P) / (Ni + 0.31 × Mn + 22 × C + 14.2 × N + Cu + 6 × P) are given.

The mark * indicates falling outside the conditions specified by the present invention.

Each ingot obtained was hot-forged in the conventional manner and then subjected to solution heat treatment at 1200°C and then processed into restraint weld cracking test specimens with shape of V groove (1.5 mm, 60°) at the butt end and having a thickness of 12 mm, a width of 50 mm and a length of 150 mm, and Trans-Varestraint test specimens having a thickness of 4 mm, a width of 100 mm and a length of 100 mm.

The thus-obtained restraint weld cracking test specimens, each made of austenitic stainless steel, were peripherally restraint-welded, and each butt site was subjected to a no filler welding by the TIG welding method under the following conditions: welding current 150 A, welding voltage 12 V, welding speed 10 cm/min; and the bead surface cracking ratio, namely the percentage occurrence of solidification cracks relative to the weld bead length of the restraint weld cracking test specimens, was measured.

For more detailed evaluation of the susceptibility of each austenitic stainless steel to solidification cracking, Trans-Varestraint testing was carried out using the said Trans-Varestraint test specimens under the following conditions: welding current 100 A, welding voltage 15 V, welding speed 15 cm/min, added strain 2%; and the maximum crack length was measured. The maximum crack length evaluated by the Trans-Varestraint testing of those austenitic stainless steel weld metals, which are in conventional use for heat resisting purposes, is not longer than 1 mm. Therefore, an austenitic stainless steel showing a maximum crack length of not longer than 1 mm as evaluated by the said Trans-Varestraint testing is considered to have good resistance against weld solidification cracking.

Furthermore, using a welding material (weld wire) with an outside diameter of 1.2 mm produced in advance from each austenitic stainless steel base metal, multilayer welding was carried out by the TIG welding method under these conditions: welding current 165 A, welding voltage 15 V, welding speed 10 cm/min; and test specimens having the dimension shown in Fig. 1, were prepared and subjected to creep rupture testing under the conditions of 700°C and 147 MPa, for investigating the creep rupture time of the welded joint. In the case of TIG welding, the chemical composition of the weld metal hardly undergoes dilution, hence remains the same as that of the base metal.

The results of the tests mentioned above are summarized in Table 2, together with the values of the left side member of the said formula (1) or (2). In Table 2, the creep rupture property was evaluated by "×", when the creep rupture time was shorter than 1000 hours, and was evaluated by "o", when the said time was 1000 hours or longer.

[Table 2]

Table 2

| Steel | Value of formula | Weldability | | Result of creep rupture testing under conditions of 700°C and 147 MPa | Remark |
|---|---|---|---|---|---|
| | | Bead surface cracking ratio in restraint weld cracking testing (%) | Maximum crack length in Trans-Varestraint testing (mm) | | |
| 1 | 1.6570 | 0 | 0.63 | ○ | Reference ex. |
| 2 | 1.6485 | 0 | 0.51 | ○ | Inventive examples |
| 3 | 1.5780 | 0 | 0.71 | ○ | |
| 4 | 1.6506 | 0 | 0.58 | ○ | Reference examples |
| 5 | 1.5368 | 0 | 0.98 | ○ | |
| 6 | 1.5971 | 0 | 0.49 | ○ | |
| 7 | 1.5273 | 0 | 0.379 | ○ | |
| 8 | 1.4708 | 0 | 0.248 | ○ | |
| 9 | 1.3883 | 0 | 0.826 | ○ | |
| 10 | 1.7133 | 0 | 0.397 | ○ | |
| 11 | 1.3968 | 0 | 0.411 | ○ | |
| 12 | 1.3917 | 0 | 0.532 | ○ | |
| *A | 1.4901 | 0 | 0.42 | × | Comparative examples |
| *B | *1.3871 | 100 | 1.01 | ○ | |
| *C | *1.3806 | 100 | 3.96 | ○ | |
| *D | *1.2078 | 100 | 2.77 | ○ | |

The value of formula for steel 7 is the value of $(Cr + 1.5 \times Si + 2 \times P) / (Ni + 0.31 \times Mn + 22 \times C + 14.2 \times N + 5 \times P)$; for other steels, values of $(Cr + 1.5 \times Si + 2 \times Nb + Ti + 2 \times P) / (Ni + 0.31 \times Mn + 22 \times C + 14.2 \times N + Cu + 5 \times P)$ are given.

(continued)

| Steel | Value of formula | Weldability | | Result of creep rupture testing under conditions of 700°C and 147 MPa | Remark |
|---|---|---|---|---|---|
| | | Bead surface cracking ratio in restraint weld cracking testing (%) | Maximum crack length in Trans-Varestraint testing (mm) | | |
| The marks "c" and "x" in the column "Result of creep rupture testing" respectively indicate that the rupture time was 1000 hours or longer and that it was shorter than 1000 hours. The mark * indicates falling outside the conditions specified by the present invention. | | | | | |

From Table 2, it is evident that in the case of the steels 2 and 3, falling within the conditions specified by the present invention, the bead surface cracking ratio in the restraint weld cracking testing was 0 (zero), namely no cracking occurred at all in the weld metal and the maximum crack length in Trans-Varestraint testing was not longer than 1 mm Consequently, the said steels 2 and 3 have excellent weldability, in spite of their high P levels of 0.09 to 0.29%. Furthermore, in the case of the above-mentioned steels 2 and 3, the creep rupture time was 1000 hours or longer; therefore it is evident that they are excellent in creep characteristics.

On the contrary, the comparative steels A to D falling out of the conditions specified by the present invention were inferior in weldability or creep characteristics.

That is to say, in the case of steel A, owing to the low P content of 0.03%, the bead surface cracking ratio was 0, namely no cracking occurred in the weld metal, in the restraint weld cracking testing, and moreover, the maximum crack length in the Trans-Varestraint testing was not longer than 1 mm. This means that the said steel A has excellent weldability; however, the creep rupture time thereof was shorter than 1000 hours, hence the steel A is inferior in creep characteristics.

In the case of steels B to D, the creep rupture time was 1000 hours or longer, hence they are excellent in creep characteristics; however, since the said formula (2) was not satisfied, cracking occurred in the weld metal in restraint weld cracking testing and, in Trans-Varestraint testing, the maximum crack length was longer than 1 mm, hence the steels are inferior in weldability and not suited for practical use.

INDUSTRIAL APPLICABILITY

The austenitic stainless steel welded joints of the present invention can be widely applied as steel pipes, steel plates and so on in such fields where not only high-temperature strength and corrosion resistance but also weldability is required, in spite of high P content thereof. The austenitic stainless steel welding materials of the present invention are best suited for producing the above-mentioned austenitic stainless steel welded joints.

**Claims**

1. An austenitic stainless steel welded joint, which consists of by mass percent, C: 0.05 to 0.25%, Si: not more than 2%, Mn: 0.01 to 1.5%, P: more than 0.08% not more than 0.5%, S: not more than 0.03%, Cr: 18 to 30%, Ni: 8 to 55%, sol. Al: 0.001 to 0.1%, N: not more than 0.03%, B: 0.001 to 0.03%, Nb: 0.05 to 1.5%, Ti: 0.05 to 2% and optionally at least one element selected from the first and second groups given below, with the balance being Fe and impurities, and the following formula (1) is satisfied:

$$(Cr + 1.5 \times Si + 2 \times P)/(Ni + 0.31 \times Mn + 22 \times C + 14.2 \times N + 5 \times P)$$

$$\geq 1.388 \quad \text{Formula (1),}$$

wherein each element symbol in the formula (1) represents the content by mass percent of the element concerned; First group: one or more of Cu: not more than 3%, Mo: not more than 5% and W: not more than 10% provided that Mo + (W/2): not more than 5%, Ta: not more than 8%, Zr: not more than 1%, Hf: not more than 1% and Co: not more than 5%; and Second group: one or both of Ca: not more than 0.05% and Mg: not more than 0.05%.

2. The austenitic stainless steel welded joint according to claim 1, which further satisfies the following formula (2):

$$(Cr + 1.5 \times Si + 2 \times Nb + Ti + 2 \times P)/(Ni + 0.31 \times Mn + 22 \times C +$$
$$14.2 \times N + Cu + 5 \times P) \geq 1.388 \quad \text{Formula (2)},$$

wherein each element symbol in the formula (2) represents the content by mass percent of the element concerned.

3. An austenitic stainless steel welding material, which consists of by mass percent, C: 0.05 to 0.25%, Si: not more than 2%, Mn: 0.01 to 1.5%, P: more than 0.08% not more than 0.5%, S: not more than 0.03%, Cr: 18 to 30%, Ni: 8 to 55%, sol. Al: 0.001 to 0.1%, N: not more than 0.03%, B: 0.001 to 0.03%, Nb: 0.05 to 1.5%, Ti: 0.05 to 2% and optionally at least one element selected from the first and second groups given below, with the balance being Fe and impurities, and the following formula (1) is satisfied:

$$(Cr + 1.5 \times Si + 2 \times P)/(Ni + 0.31 \times Mn + 22 \times C + 14.2 \times N + 5 \times P)$$
$$\geq 1.388 \quad \text{Formula (1)},$$

wherein each element symbol in the formula (1) represents the content by mass percent of the element concerned;
First group: one or more of Cu: not more than 3%, Mo: not more than 5% and W: not more than 10% provided that Mo + (W/2): not more than 5%, Ta: not more than 8%, Zr: not more than 1%, Hf: not more than 1% and Co: not more than 5%; and
Second group: one or both of Ca: not more than 0.05% and Mg: not more than 0.05%.

4. The austenitic stainless steel welding material according to claim 3, which further satisfies the following formula (2):

$$(Cr + 1.5 \times Si + 2 \times Nb + Ti + 2 \times P)/(Ni + 0.31 \times Mn + 22 \times C +$$
$$14.2 \times N + Cu + 5 \times P) \geq 1.388 \quad \text{Formula (2)},$$

wherein each element symbol in the formula (2) represents the content by mass percent of the element concerned.

**Patentansprüche**

1. Austenitische Edelstahlschweißverbindung, welche in Masseprozent besteht aus C: 0,05 bis 0,25%, Si: nicht mehr als 2%, Mn: 0,01 bis 1,5%; P: mehr als 0,08% nicht mehr als 0,5%, S: nicht mehr als 0,03%, Cr: 18 bis 30%, Ni: 8 bis 55%, lösl. Al: 0,001 to 0,1%, N: nicht mehr als 0,03%, B: 0,001 bis 0,03%, Nb: 0.05 bis 1,5%, Ti: 0,05 bis 2% und optional zumindest ein Element, das aus den unten angegebenen ersten und zweiten Gruppen ausgewählt ist, wobei der Restbetrag Fe und Verunreinigungen sind, und die folgende Formel (1) erfüllt ist:

$$(Cr + 1,5 \times Si + 2 \times P)/(Ni + 0,31 \times Mn + 22 \times C + 14,2 \times N + 5 \times P)$$
$$\geq 1,388 \quad \text{Formel (1)},$$

wobei jedes Elementsymbol in der Formel (1) den Gehalt in Masseprozent des betreffenden Elements darstellt;
Erste Gruppe: eines oder mehrere aus Cu: nicht mehr als 3%, Mo: nicht mehr als 5% und W: nicht mehr als 10% vorausgesetzt, dass Mo + (W/2): nicht mehr als 5 %, Ta: nicht mehr als 8%, Zr: nicht mehr als 1%, Hf: nicht mehr als 1% und Co: nicht mehr als 5%; und
Zweite Gruppe: eines oder beides aus Ca: nicht mehr als 0.05% und Mg: nicht mehr als 0,05%.

2. Austenitische Edelstahlschweißverbindung nach Anspruch 1, welche ferner die folgende Formel (2) erfüllt:

$$(Cr + 1,5 \times Si + 2 \times Nb + Ti + 2 \times P)/(Ni + 0,31 \times Mn + 22 \times C +$$
$$14,2 \times N + Cu + 5 \times P) \geq 1,388 \quad \text{Formel (2)},$$

wobei jedes Elementsymbol in der Formel (2) den Gehalt in Masseprozent des entsprechenden Elements darstellt.

3. Austenitisches Edelstahlschweißmaterial, welches in Masseprozent besteht aus C: 0,05 bis 0,25%, Si: nicht mehr als 2%, Mn: 0.01 bis 1,5%, P: mehr als 0,08% nicht mehr als 0,5%, S: nicht mehr als 0,03%, Cr: 18 bis 30%, Ni: 8 bis 55%, lösl. Al: 0,001 bis 0,1%, N: nicht mehr als 0,03%, B: 0,001 bis 0,03%, Nb: 0,05 bis 1,5%, Ti: 0,05 bis 2% und optimal zumindest ein Element, das aus den unten angegebenen ersten und zweiten Gruppen ausgewählt ist, wobei der Restbetrag Fe und Verunreinigungen sind, und die folgende Formel (1) erfüllt ist:

$$(Cr + 1,5 \times Si + 2 \times P)/(Ni + 0,31 \times Mn + 22 \times C + 14,2 \times N + 5 \times P) \geq 1,388 \qquad \text{Formel (1)}$$

wobei jedes Elementsymbol in der Formel (1) den Gehalt in Masseprozent des entsprechenden Elements darstellt;
Erste Gruppe: eines oder mehrere aus Cu: nicht mehr als 3%, Mo: nicht mehr als 5% und W: nicht mehr als 10% vorausgesetzt, dass Mo + (W/2): nicht mehr als 5%, Ta: nicht mehr als 8%, Zr: nicht mehr als 1%, Hf: nicht mehr als 1% und Co: nicht mehr als 5%; und
Zweite Gruppe: eines oder beides aus Ca: nicht mehr als 0,05% und Mg: nicht mehr als 0,05%.

4. Austenitisches Edelstahlschweißmaterial nach Anspruch 3, welches ferner die folgende Formel (2) erfüllt:

$$(Cr + 1,5 \times Si + 2 \times Nb + Ti + 2 \times P)/(Ni + 0,31 \times Mn + 22 \times C + 14,2 \times N + Cu + 5 \times P) \geq 1,388 \qquad \text{Formel (2)},$$

wobei jedes Elementsymbol in der Formel (2) den Gehalt in Masseprozent des entsprechenden Elements darstellt.

**Revendications**

1. Joint soudé en acier inoxydable austénitique, qui est constitué en pour cent en masse de, C : de 0,05 à 0,25%, Si : pas plus de 2%, Mn : de 0,01 à 1,5%, P : plus de 0,08% pas plus de 0,5%, S : pas plus de 0,03%, Cr : de 18 à 30%, Ni : de 8 à 55%, Al sol. : de 0,001 à 0,1%, N : pas plus de 0,03%, B : de 0,001 à 0,03%, Nb : de 0,05 à 1,5%, Ti : de 0,05 à 2% et éventuellement au moins un élément choisi dans des premier et deuxième groupes donnés ci-dessous, avec le reste étant du Fe et des impuretés, et la formule (1) suivante est satisfaite :

$$(Cr + 1,5 \times Si + 2 \times P)/(Ni + 0,31 \times Mn + 22 \times C + 14,2 \times N + 5 \times P) \geq 1,388 \quad \text{Formule (1)},$$

où chaque symbole d'élément dans la formule (1) représente la teneur en pour cent en masse de l'élément en question ;
Premier groupe : un ou plusieurs élément(s) parmi Cu : pas plus de 3%, Mo : pas plus de 5% et W : pas plus de 10% à condition que Mo + (W/2) : pas plus de 5%, Ta : pas plus de 8%, Zr : pas plus de 1%, Hf : pas plus de 1% et Co : pas plus de 5% ; et
Deuxième groupe : l'un parmi Ca : pas plus de 0,05% et Mg : pas plus de 0,05% ou les deux.

2. Joint soudé en acier inoxydable austénitique selon la revendication 1, qui satisfait en outre la formule (2) suivante :

$$(Cr + 1,5 \times Si + 2 \times Nb + Ti + 2 \times P)/(Ni + 0,31 \times Mn + 22 \times C + 14,2 \times N + Cu + 5 \times P) \geq 1,388 \quad \text{Formule (2)},$$

où chaque symbole d'élément dans la formule (2) représente la teneur en pour cent en masse de l'élément en question.

3. Matériau de soudage en acier inoxydable austénitique, qui est constitué en pour cent en masse de, C : de 0,05 à 0,25%, Si : pas plus de 2%, Mn : de 0,01 à 1,5%, P : plus de 0,08% pas plus de 0,5%, S : pas plus de 0,03%, Cr : de 18 à 30%, Ni : de 8 à 55%, Al sol. : de 0,001 à 0,1%, N : pas plus de 0,03%, B : de 0,001 à 0,03%, Nb : de 0,05 à 1,5%, Ti : de 0,05 à 2% et éventuellement au moins un élément choisi dans les premier et deuxième groupes donnés ci-dessous, avec le reste étant du Fe et des impuretés, et la formule (1) suivante est satisfaite :

$$(Cr + 1,5 \ x \ Si + 2 \ x \ P)/(Ni + 0,31 \ x \ Mn + 22 \ x \ C +$$
$$14,2 \ x \ N + 5 \ x \ P) \ 10 \geq 1,388 \quad Formule \ (1),$$

où chaque symbole d'élément dans la formule (1) représente la teneur en pour cent en masse de l'élément en question ;

Premier groupe : un ou plusieurs élément(s) parmi Cu : pas plus de 3%, Mo : pas plus de 5% et W : pas plus de 10% à condition que Mo + (W/2) : pas plus de 5%, Ta : pas plus de 8%, Zr : pas plus de 1%, Hf : pas plus de 1% et Co : pas plus de 5% ; et

Deuxième groupe : l'un parmi Ca : pas plus de 0,05% et Mg : pas plus de 0,05% ou les deux.

4. Matériau de soudage en acier inoxydable austénitique selon la revendication 3, qui satisfait en outre la formule (2) suivante :

$$(Cr + 1,5 \ x \ Si + 2 \ x \ Nb + Ti + 2 \ x \ P)/(Ni + 0,31 \ x \ Mn$$
$$+ 22 \ x \ C + 14,2 \ x \ N + Cu + 5 \ X \ P) \geq 1,388 \quad Formule \ (2),$$

où chaque symbole d'élément dans la formule (2) représente la teneur en pour cent en masse de l'élément en question.

Fig. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 62243742 A
- JP 62243743 B
- JP 3153847 A
- JP 2003535213 A

**Non-patent literature cited in the description**

- **KAZUTOSHI NISHIMOTO ; SYOGO NATSUME ; KAZUHIRO OGAWA ; OSA MATSUMOTO.** Suten-resuko no Yosetsu. Sanpo Publications, Inc, 2001, 87-88